# EUROPÄISCHE PATENTSCHRIFT

(11) **EP 1 361 112 B1**
(45) Veröffentlichungstag und Bekanntmachung des Hinweises auf die Patenterteilung: **12.04.2006**
(21) Anmeldenummer: 03006339.0
(22) Anmeldetag: 20.03.2003
(51) Int. Cl.: H01H 25/04

(54) **Schalter, insbesondere Lenkstockschalter für ein Fahrzeug**
Switch, especially steering column switch for a vehicle
Commutateur, notamment commutateur de colonne de direction pour véhicule

(30) Priorität: 08.05.2002 DE 10220437
(43) Veröffentlichungstag der Anmeldung: 12.11.2003
(73) Patentinhaber: Valeo Schalter und Sensoren GmbH, 74321 Bietigheim-Bissingen (DE)
(72) Erfinder: Lipfert, Rainer, 74076 Heilbronn (DE); Simonis, Karl, 75428 Illingen (DE); Klein, Rudolf, 74348 Lauffen a.N. (DE); Hecht, Walter, 74321 Bietigheim-Bissingen (DE)
(74) Vertreter: Dreiss, Fuhlendorf, Steimle & Becker

(56) Entgegenhaltungen:
- WO-A-03/030197
- DE-C- 19 936 484
- FR-A- 2 657 458
- US-A- 5 939 686

## Beschreibung

Die Erfindung betrifft Schalter, insbesondere Lenkstockschalter für Fahrzeuge, mit einem Gehäuse, mit einem in dem Gehäuse beweglich gehaltenen, über ein Betätigungsglied beeinflussbaren Schaltstück, wobei das Schaltstück ein in einer Führung axial verschiebbar gelagertes Steuerteil umfasst, das einen über eine Feder vorgespannten, gegen eine gehäuseseitige Steuerkurve wirkenden Rastabschnitt aufweist. Das Schaltstück, das über das Betätigungsglied beeinflussbar ist, steht hierbei in Wirkverbindung mit einem Funktionselement.

Derartige Schalter finden ihren Einsatz in vielen Bereichen der Technik. Mit einem solchen, vorzugsweise für ein Kraftfahrzeug vorgesehenen Schalter können z.B. die verschiedenen Funktionen der Beleuchtungsanlage, der Fahrtrichtungsanzeigeanlage und/oder der Scheibenwischanlage realisiert werden. Zur Realisierung der Funktionen wird dabei das Schaltstück über das Betätigungsglied in verschiedene Funktionsstellungen gebracht. Die Funktionsstellungen können tastend und/oder rastend ausgeführt sein. Je nach Funktionsstellung werden in Wirkverbindung mit dem Schaltstück stehende Funktionselemente betätigt.

Insbesondere bei Lenkstockschaltern von Kraftfahrzeugen ist es zum Zweck der Realisierung von exakt definierten Funktionsstellungen aufgrund des relativ lang ausgeführten Schalthebels notwendig, ein möglichst spielfreies Zusammenwirken des Schaltstücks bzw. des Steuerteils mit der Steuerkurve zu gewährleisten. Die Realisierung einer derartigen spielfreien Lagerung hat sich allerdings als schwierig herausgestellt.

Aus der DE 199 36 484 C1 ist bekannt geworden, zur Realisierung von exakt definierten Funktionsstellungen das Steuerteil mit zwei entsprechenden Lagerstellen vorzusehen, wobei zumindest eine der beiden Lagerstellen steuerbolzenseitig mit einer aus einem Gleitmaterial bestehenden Schicht versehen ist. Um einen derartigen Schalter zu realisieren, sind sehr geringe Toleranzen an den Lagerstellen bzw. an den Abschnitten des als. Steuerbolzen ausgebildeten Steuerteils erforderlich, die mit den Lagerstellen zusammenwirken. Zum Aufbringen des Gleitmaterials sind mehrere Arbeitsschritte erforderlich. Außerdem ist eine derart genaue Fertigung mit hohem Aufwand und deshalb mit entsprechend hohen Kosten verbunden.

Gemäß dem bekannten Stand der Technik tritt ferner die Problematik auf, dass in bestimmten Temperaturbereichen ein gewisses Spiel in der Führung vorhanden ist. Zwar mag in einem vorgegebenen Temperaturbereich eine weitgehend spielfreie Lagerung möglich sein; bei Temperaturen außerhalb dieses Temperaturbereichs ist allerdings aufgrund der unterschiedlichen Wärmeausdehnungen der verwendeten Materialien ein unerwünschtes Spiel vorhanden. Dies führt zu einem unangenehmen Schaltgeräusch, zu einer unangenehmen Haptik beim Schalten und zu einem verstärkten Hebelüberschlagen in die entgegengesetzte Richtung nach dem Rücklauf bzw. Rückführen des Schalters.

Aus der WO 03/030197A1 ist eine nachveröffentlichte Schalteinrichtung mit einem Rastbolzen bekannt geworden. Der Rastbolzen weist einen zylindrischen Schaft auf sowie Andrückarme, die über Verschwenkstellen mit dem Schaft beweglich verbunden sind. Hinter den Verschwenkstellen weist die Mantelfläche des Rastbolzens eine etwas dünnere Materialstärke auf. Dabei können im Bereich der Verschwenkstellen auch Materialeinschnürungen, beispielsweise Filmscharniere, vorgesehen sein. Im Schaft ist eine Feder angeordnet, die die Andrückarme nach radial außen drückt.

Der vorliegenden Erfindung liegt die Aufgabe zugrunde, einen Schalter der eingangs beschriebenen Art derart weiterzubilden, dass das Steuerteil möglichst spielfrei in dem Schaltstück bzw. in der Führung gelagert ist, ohne dass hochgenaue Lagertoleranzen einzuhalten sind. Außerdem ist unabhängig von den verwendeten, unterschiedlichen Materialien und unabhängig von äußeren Temperatureinflüssen eine spielfreie Lagerung wünschenswert.

Diese Aufgabe wird durch einen Schalter mit den Merkmalen des Anspruchs 1 gelöst. Die Vorspannung ist hierbei so vorzusehen, dass sie zum einen hoch genug ist, um vorhandene Toleranzen auszugleichen, und zum anderen dennoch ein axiales Verschieben des Steuerteils in der Führung ermöglicht. Der erfindungsgemäße Schalter hat den Vorteil, dass die Fertigungstoleranzen der Führung und des Steuerteils bzw. des Aufnahmeabschnitts des Steuerteils relativ groß gehalten werden können. Ein mögliches Spiel zwischen der Führung und dem Steuerteil wird aufgrund der nach radial außen wirkenden Zungen des Aufnahmeabschnitts ausgeglichen. Durch Vorsehen der nach radial außen gegen die Führung gerichteten Vorspannung wird auch bei unterschiedlichen Temperaturen eine unterschiedliche Wärmeausdehnung der einzelnen Bauteile ausgeglichen und eine spielfreie Lagerung gewährleistet.

Um eine definierte Anlage der Zunge an der Führung zu erreichen, ist erfindungsgemäß vorgesehen, dass das freie Ende der Zunge eine nach außen gerichtete Erhebung aufweist, die mit der Führung zusammenwirkt. Eine derartige Erhebung ist im Längsschnitt erfindungsgemäß bogen- oder kreisabschnittförmig, so dass in axialer Richtung gerichtete Reibungskräfte gering gehalten werden. Dabei wird die Zunge direkt von der Feder nach radial außen beaufschlagt.

Vorteilhafterweise wirkt die Feder mit der Zunge derart zusammen, dass die Zunge gegen die Führung wirkt. Dadurch, dass die Federkraft der Feder ursächlich ist für das Beaufschlagen der Zunge nach radial außen gegen die Führung, kann eine ausreichende Vorspannung der Zunge gewährleistet werden. Zusätzliche Bauteile oder eine entsprechende Elastizität des Materials der Zunge zur Realisierung der Vorspannung sind nicht erforderlich.

Das freie Ende der Zunge liegt vorteilhafterweise nahe dem Rastabschnitt. Dies hat den Vorteil, dass seitlich auf den Rastabschnitt wirkende Kräfte ein nur geringes Moment im Steuerteil erzeugen.

Eine weitere vorteilhafte Ausgestaltung der Erfindung ergibt sich dann, wenn das freie Ende der Zunge eine nach innen gerichtete Erhebung aufweist, die mit der Feder zusammenwirkt. Die nach innen gerichtete Erhebung bewirkt, dass die Zunge gegenüber der Mantelfläche des Aufnahmeabschnitts federnd gespannt vorsteht bzw. im montierten Zustand gegen die Führung wirkt. Besonders vorteilhaft ist, wenn die dem Rastabschnitt nächstgelegene Federwicklung mit der Erhebung zusammenwirkt.

Dabei ist vorteilhaft, wenn die nach innen gerichtete Erhebung im Längsschnitt dreieck- oder keilförmig ist. Eine derartige Erhebung hat den Vorteil, dass die in axialer Richtung wirkende Federkraft an der Erhebung in zwei definierte Kraftkomponenten aufgeteilt wird, nämlich zum einen in eine in axialer Längsrichtung wirkende Komponente, die den Rastabschnitt gegen die Steuerkurve beaufschlagt, und in eine.nach radial außen wirkende Komponente, die die Federzunge gegen die Führung beaufschlagt. Je nach Winkel der dreieck- oder keilförmigen Erhebung können die Kraftkomponenten in ihrer Höhe eingestellt werden.

Eine bevorzugte Ausführungsform ergibt sich dann, wenn die Führung im Querschnitt kreisförmig ist. In einer derartigen Führung kann das Steuerteil um seine Längsachse drehbar gelagert sein, was je nach Ausführung der Steuerkurve vorteilhaft sein kann. Andererseits ist denkbar, dass die Führung im Querschnitt rechteckig, insbesondere quadratisch ausgebildet sein kann.

Vorteilhaft ist ferner, wenn die Führung in Richtung der Steuerkurve eine geringfügige Aufweitung aufweist. Diese geringfügige Aufweitung hat den Vorteil, dass ein Anliegen des hülsenartigen Aufnahmeabschnitts über seine gesamte Oberfläche nicht erfolgt. Vielmehr liegen die Federzungen, und insbesondere die nach außen gerichteten Erhebungen der Federzungen, an der Oberfläche der Aufweitung an. Dies wirkt einem Verkanten oder Verklemmen des Steuerteils in der Führung entgegen.

Vorzugsweise erstreckt sich die wenigstens eine Zunge in Längsrichtung. Hierdurch wird eine vorteilhafte Krafteinleitung der Vorspannkraft in die Zunge erreicht.

Um eine möglichst gleichmäßige und spielfreie Lagerung zu erhalten, ist besonders vorteilhaft, wenn mehrere parallel zueinander verlaufende Zungen vorgesehen sind. Beispielsweise können drei oder vier sich in Längsrichtung erstreckende Zungen an dem hülsenartigen Aufnahmeabschnitt angeordnet sein.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Zeichnung zeigen:
- Fig. 1:: den Längsschnitt durch das freie Ende eines erfindungsgemäßen Schalters;
- Fig. 2:: das Steuerteil des Schalters gemäß Fig. 1 in perspektivischer Darstellung; und
- Fig. 3:: einen Längsschnitt durch das Schaltstück und das Steuerteil gemäß Fig. 1.

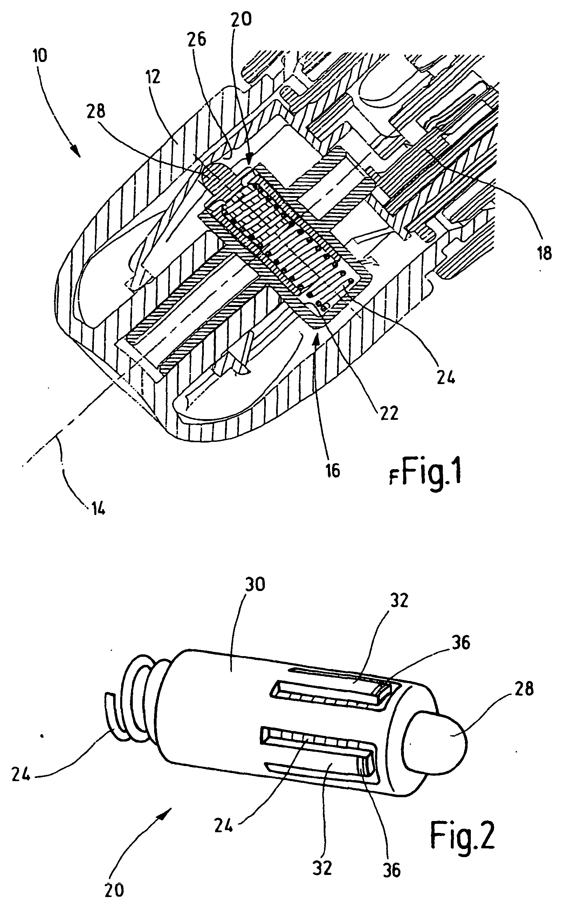

Fig. 1 zeigt das freie Ende eines Schalthebels eines Lenkstockschalters 10. Der Schalter 10 umfasst ein kappenartiges Betätigungsglied 12, das in Richtung der Achse 14 durch Drücken betätigbar ist. Das Betätigungsglied 12 beeinflusst ein Schaltstück 16, das in Wirkverbindung mit einem Kontaktgeber 18 steht. Zur Realisierung von exakt definierten Funktionsstellungen sieht das Schaltstück 16 ein Steuerteil 20 vor, das in einer Führung 22 axial verschiebbar gegen die Federkraft einer Feder 24 gelagert ist. Das Steuerteil 16 umfasst einen mit der Federkraft gegen eine gehäuseseitige Steuerkurve 26 wirkenden Rastabschnitt 28. Die Steuerkurve 26 sieht verschiedene Rastpositionen vor, mit denen der Rastabschnitt 28 zur Realisierung von exakt definierten Funktionsstellungen zusammenwirkt.

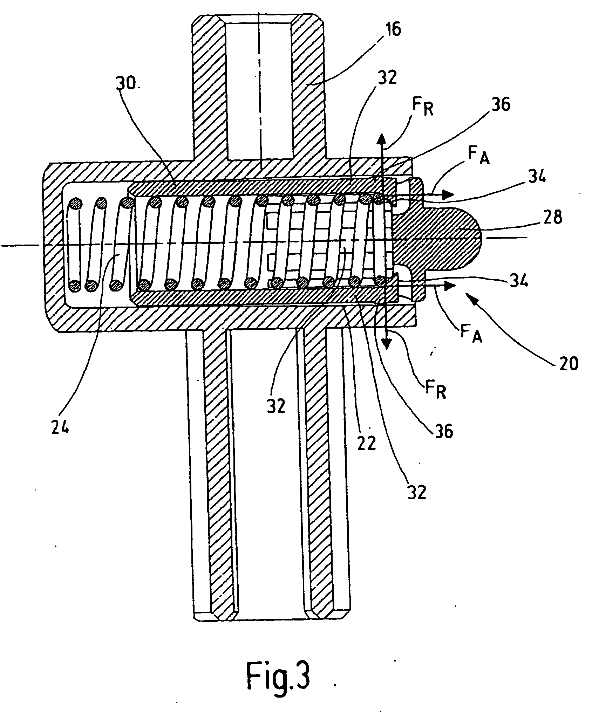

Wie aus den Fig. 2 und 3 deutlich hervorgeht, weist das Steuerteil 20 einen sich in Längsrichtung des Steuerteils 20 erstreckenden hülsenartigen Aufnahmeabschnitt 30 auf, der das dem Rastabschnitt 28 zugewandte Ende der Feder 24 umgibt. Insbesondere aus Fig. 2 wird deutlich, dass der Aufnahmeabschnitt 30 elastisch nachgiebige Zungen 32 aufweist.

Die Zungen 32 erstrecken sich in Längsrichtung des Steuerteils 20 und sind parallel zueinander angeordnet. Die freien Enden der Zungen 32 sind dem Rastabschnitt 28 nahegelegen und wirken unter Vorspannung nach radial außen gegen die Führung 22. Die Vorspannung, die grundsätzlich auch durch entsprechende elastische Eigenschaften des Materials des Aufnahmeabschnitts 30 realisierbar ist, wird bei dem in den Figuren gezeigten Ausführungsbeispiel dadurch erreicht, dass die Zungen 32 direkt von der Feder 24 nach radial außen beaufschlagt werden. Dies wird dadurch erreicht, dass die freien Enden der Zungen 32 eine nach radial innen gerichtete Erhebung 34 aufweisen. Die Erhebungen 34 wirken mit der Feder 24 bzw., wie aus Fig. 3 deutlich wird, mit der letzten, dem Rastabschnitt 28 zugewandten Federwicklung zusammenwirken. Die Erhebungen 34 sind im Längsschnitt dreieckförmig und bewirken ein Aufspalten der von der Feder 24 erzeugten Axialkraft in nach radial außen gerichtete Radialkräfte F_{R}. Die verbleibenden axialen Kräfte sind in.der Fig. 3 mit F_{A} gekennzeichnet.

Die freien Enden der insgesamt vier Zungen 32 weisen nach außen gerichtete Erhebungen 36 auf, die mit der Führung 22 zusammenwirken. Die freien Enden der Zungen 32 kontaktieren folglich die Oberfläche der Führung 22 lediglich im Bereich der Erhebungen 36. Dadurch werden gute Gleiteigenschaften des Steuerteils 20 in der Führung 22 erreicht.

Sowohl die Führung 22 als auch die Außenseite des Steuerteils 20 sind im Querschnitt kreisförmig ausgebildet.

Die Führung 22 weist in Richtung der Steuerkurve, also in Richtung des Rastabschnitts 28, eine geringfügige Aufweitung auf. Durch Vorsehen dieser Aufweitung wird einem Verklemmen oder Verkeilen des Steuerteils 20 bzw. des Aufnahmeabschnitts 30 in der Führung 22 entgegengewirkt,

Weil die Aufweitung lediglich in dem dem Rastabschnitt 28 zugewandten Bereich der Führung 22 vorgesehen ist, wird das dem Rastabschnitt 28 abgewandte Ende des Aufnahmeabschnitts großflächig von der Führung 22 geführt. Erfindungsgemäß ist ebenfalls denkbar, dass an dem dem Rastabschnitt 28 abgewandten Bereich nach radial außen gerichtete Erhebungen vorgesehen sind, die punkt- oder linienförmig an der Oberfläche der Führung 22 anliegen. Dann ist es allerdings von Vorteil, wenn die Führung 22 zylindrisch, also ohne Aufweitung, ausgebildet ist.

Dadurch, dass über die Feder 24 eine nach radial außen wirkende Kraft F_{R} erzeugt wird, mit der die Zungen 32 bzw. das Steuerteil 20 unter Vorspannung in der Führung 22 des Schaltstücks 16 gehalten wird, wird das Steuerteil 20 in dem Schaltstück 16 spielfrei gelagert. Dennoch ist eine axiale Verschiebbarkeit des Schaltstücks gegen die axial wirkende Kraftkomponente der Feder 24 möglich. Der erfindungsgemäße Schalter 10 hat folglich den Vorteil, dass die Schaltstellungen exakt definiert sind und ein fertigungsbedingtes Spiel nicht vorhanden ist, das zu einem lästigen Schaltgeräusch, einer unangenehmen Haptik und zu einem verstärkten Hebelüberschlagen in entgegengesetzter Richtung nach dem Rücklauf des Betätigungsgliedes führt. Der erfindungsgemäße Schalter 10 ist ferner unabhängig von der Umgebungstemperatur mit gleichbleibender Exaktheit zu schalten.

## Patentansprüche

1. Schalter (10), insbesondere Lenkstockschalter für Fahrzeuge, mit einem Gehäuse, mit einem in dem Gehäuse beweglich gehaltenen, über ein Betätigungsglied (12) beeinflussbaren Schaltstück (16), wobei das Schaltstück (16) ein in einer Führung (22) gegen die Federkraft einer Feder (24) axial verschiebbar gelagertes Steuerteil (20) umfasst, das einen mit der Federkraft gegen eine gehäuseseitige Steuerkurve (26) wirkenden Rastabschnitt (28) aufweist, wobei das Steuerteil (20) einen sich in Längsrichtung erstreckenden hülsenartigen Aufnahmeabschnitt (30) für die Feder (24) aufweist, wobei der Aufnahmeabschnitt (30) wenigstens eine elastisch nachgiebige Zunge (32) aufweist; die direkt von der Feder (24) nach radial außen gegen die Führung (22) beaufschlagt wird, und wobei die Wandstärken des Aufnahmeabschnitts (30) und der Zunge (32) gleich sind und die Zunge (32) im Bereich ihres freien Endes eine nach außen gerichtete, im Längsschnitt bogen- oder kreisabschnittförmige Erhebung (36) aufweist, die mit der Führung (22) zusammenwirkt.

2. Schalter (10) nach Anspruch 1, **dadurch gekennzeichnet, dass** die Feder (24) mit der Zunge (32) derart zusammenwirkt, dass die Zunge (32) gegen die Führung (22) wirkt.

3. Schalter (10) nach Anspruch 1 oder 2, **dadurch gekennzeichnet, dass** das freie Ende der Zunge (32) nahe dem Rastabschnitt (28) liegt.

4. Schalter (10) nach einem der vorhergehenden Ansprüche, **dadurch gekennzeichnet, dass** das freie Ende der Zunge (32) eine nach innen gerichtete Erhebung (34) aufweist, die mit der Feder (24) zusammenwirkt.

5. Schalter (10) nach Anspruch 4, **dadurch gekennzeichnet, dass** die dem Rastabschnitt (28) nächstgelegene Federwicklung mit der nach innen gerichteten Erhebung (34) zusammenwirkt.

6. Schalter (10) nach Anspruch 4 oder 5, **dadurch gekennzeichnet, dass** die nach innen gerichtete Erhebung (34) im Längsschnitt dreieck- oder keilförmig ist.

7. Schalter (10) nach einem der vorhergehenden Ansprüche, **dadurch gekennzeichnet, dass** die Führung (22) im Querschnitt kreisförmig ausgebildet ist und in Längsrichtung zur Steuerkurve (26) hin eine geringfügige und stufenlose Aufweitung aufweist.

8. Schalter (10) nach einem der vorhergehenden Ansprüche, **dadurch gekennzeichnet, dass** die wenigstens eine Zunge (32) sich in Längsrichtung erstreckt.

9. Schalter (10) nach einem der vorhergehenden Ansprüche, **dadurch gekennzeichnet, dass** wenigstens zwei, vorzugsweise drei oder vier parallel zueinander verlaufende Zungen (32) vorgesehen sind.

## Claims

1. Switch (10), particularly steering column switch for motor vehicles, having a housing with a contact member (16) which can be influenced by means of an actuating member (12) and is movably held in the housing, wherein the contact member (16) comprises a control member (20) mounted axially displaceable in a guideway (22) against the force of a spring (24), said control member having a stop section (28) acting with the spring force against a control cam (26) on the housing side, wherein the control member (20) has a sleeve-like receptacle section (30) extending in the longitudinal direction for the spring (24), wherein the receptacle section (30) has at least one elastically flexible tongue (32) which is impinged upon directly by the spring (24) radially outwardly against the guideway (22), and wherein the wall thicknesses of the receptacle section (30) and of the tongue (32) are equal and, in the region of its free end, the tongue (32) has an outwardly directed elevation (36) which is circular segment-shaped in longitudinal section and cooperates with the guideway (22).

2. Switch (10) according to claim 1, **characterised in that** the spring (24) cooperates with the tongue (32) such that the tongue (32) acts against the guideway (22).

3. Switch (10) according to claim 1 or 2, **characterised in that** the free end of the tongue (32) lies close to the stop section (28).

4. Switch (10) according to one of the preceding claims, **characterised in that** the free end of the tongue (32) has an inwardly directed elevation (34) which cooperates with the spring (24).

5. Switch (10) according to claim 4, **characterised in that** the spring winding lying closest to the stop section (28) cooperates with the inwardly directed elevation (34).

6. Switch (10) according to claim 4 or 5, **characterised in that** the inwardly directed elevation (34) is triangular or wedge-shaped in longitudinal section.

7. Switch (10) according to one of the preceding claims, **characterised in that** the guideway (22) is designed circular in cross-section and, in the longitudinal direction toward the control cam (26) has a slight, stepless broadening.

8. Switch (10) according to one of the preceding claims, **characterised in that** the at least one tongue (32) extends in the longitudinal direction.

9. Switch (10) according to one of the preceding claims, **characterised in that** at least two, preferably three or four, tongues (32) arranged mutually parallel are provided.

## Revendications

1. Commutateur (10), en particulier commutateur pour véhicules fixé à la colonne de direction, comportant un boîtier, un sélecteur (16), maintenu mobile dans le boîtier et pouvant être influencé par un organe de commande (12), le sélecteur (16) comportant un élément de commande (20), qui est logé dans un guidage (22) de manière à pouvoir se déplacer dans le sens axial à l'encontre de la force d'un ressort (24) et qui comporte un tronçon de verrouillage (28) agissant avec la force du ressort contre une came de commande (26) du côté du boîtier, l'élément de commande (20) comportant un tronçon de réception (30), en forme de manchon orienté dans le sens longitudinal, pour le ressort (24), le tronçon de réception (30) comportant au moins une languette (32) élastiquement flexible, qui est sollicitée directement par le ressort (24) dans le sens radial vers l'extérieur contre le guidage (22), et les parois du tronçon de réception (30) et de la languette (32) ayant la même épaisseur et la languette (32) étant munie dans la zone de son extrémité libre d'un bossage (36) en forme de courbe ou d'arc de cercle par référence à une coupe longitudinale, lequel coopère avec le guidage (22).

2. Commutateur (10) selon la revendication 1, **caractérisé en ce que** le ressort (24) coopère avec la languette (32) de telle sorte que la languette (32) agit contre le guidage (22).

3. Commutateur (10) selon la revendication 1 ou 2, **caractérisé en ce que** l'extrémité libre de la languette (32) est située à proximité du tronçon de verrouillage (28).

4. Commutateur (10) selon l'une quelconque des revendications précédentes, **caractérisé en ce que** l'extrémité libre de la languette (32) comporte un bossage (34), qui est orienté vers l'intérieur et coopère avec le ressort (24).

5. Commutateur (10) selon la revendication 4, **caractérisé en ce que** la spire du ressort la plus proche du tronçon de verrouillage (28) coopère avec le bossage (34) orienté vers l'intérieur.

6. Commutateur (10) selon la revendication 4 ou 5, **caractérisé en ce que** le bossage (34) orienté vers l'intérieur a une forme triangulaire ou conique par référence à une coupe longitudinale.

7. Commutateur (10) selon l'une quelconque des revendications précédentes, **caractérisé en ce que** le guidage (22) a une section circulaire et comporte un faible élargissement progressif vers le sens longitudinal de la came de commande (26).

8. Commutateur (10) selon l'une quelconque des revendications précédentes, **caractérisé en ce que** ladite au moins une languette (32) s'étend dans le sens longitudinal.

9. Commutateur (10) selon l'une quelconque des revendications précédentes, **caractérisé en ce qu'**il est prévu au moins deux, de préférence trois ou quatre languettes (32) parallèles entre elles.
